# EUROPEAN PATENT APPLICATION

(11) **EP 0 671 540 A1**
(43) Date of publication of application: **13.09.1995**
(21) Application number: 94119616.4
(22) Date of filing: 12.12.1994
(51) Int. Cl.: E06B 9/76, F16B 4/00, E04F 10/00

(54) **Hooked bar for the control of awnings for the outside**

(30) Priority: 07.03.1994 IT MI940404
(71) Applicant: I.M.B.A.C. S.p.a., I-20050 Mezzago (Mi) (IT)
(72) Inventor: Omati, Stefano, I-20050 Mezzago (Milan) (IT)
(74) Representative: Lecce, Giovanni

(57) **Abstract**

Hooked bar for the hand-control of awnings for the outside, including a hook (10), provided along the lower portion (14) with opposed couples of lower impressions (16) and a tubular element (12), fitted on said end.

The quadrangular impressions (26) may be located at 120°, or couples of quadrangular impressions (40, 42, 44) may be superposed and only partly aligned to one another.

## Description

This invention relates to a hooked bar for the control of awnings for the outside.

More particularly, this invention related to a hooked bar, comprising a portion from section rod coupled to a tubular section, which form together a working mechanism provided with a lower crank, suitable to realize the exposure or opening and winding of sun awnings for the outside.

As is known, for awnings which realize the localized covering of a given area hand- or motor controlled mechanisms are generally utilized. These awnings are especially utilized to create protected areas near public shops or along house terraces.

The awnings, wound up around a roller, are anteriorly connected to articulated extensible arms and are caused to expose (opening) or to retract (winding) under the activity of small winches or equivalent working mechanisms, integrated with or connected to a head of the means which support said awnings.

For the hand-control of the awnings, bars or tubular elements are traditionally utilized whose upper end is provided with a hook which engages with the working mechanism. To make the hand-controlled operations easier, bars have been realized which comprise a much lighter tubular element, associated to bar-shaped portions from metal rod section. Said bar-shaped portions support the greater strain to cause the rotation of the mechanism which controls the exposure (opening) or retraction (winding) of the awning.

The connection between the tubular element and the bar-shaped portion is generally obtained with pegs or pins arranged transversally, or through the formation of variously shaped knurls along the ends of the bar-shaped portion which houses the tubular element.

The last solution, while it allows to realize a stable connection between the elements, in particular with the lower portion of the hook and the underlying tubular body, has a serious drawback, due to the fact that the formation of knurls requires exact mechanical operations, which can be obtained only by means of special equipments. This affects remarkably the cost of the bar and does not always ensure an efficacious connection between the components.

Object of this invention is to obviate the aforementioned drawbacks.

More particularly, object of this invention is to provide a hooked bar, especially fit for the control of awnings, in which the lower end of the bar-shaped element is provided with portions obtainable in a simple and quick manner, and which ensures an efficacious connection of the underlying tubular element.

A further object of this invention is to provide a hooked bar as defined above, capable of providing a high level of resistance and reliability in the long run, and which can be realized easily and economically.

According to this invention, these and still other objects are reached by a hooked bar for the control of awnings, comprising at least a portion from rod section forming the hook connected to a tubular portion, in which the lower end of the portion from rod section forming the hook is provided with a plurality of quadrangular lower impressions obtained by coining.

The structural and functional characteristics of the bar subject matter of this invention shall be better stressed by the following detailed description, wherein reference is made to the attached drawings which represent some preferred embodiments, given by way of non limitative examples, wherein:
Fig. 1 is a schematic view of a hook of a bar for the control of awnings according to this invention, with the lower end connected to a tubular element;
Fig. 2 is the schematic view of a section obtained with a through-plane along the A-A line of Fig. 1;
Fig. 3 is the schematic view of an embodiment variant of the lower end of the hook according to this invention;
Fig. 4 is the schematic view of a through section of the hook of Fig. 3, obtained with a through-plane along the B-B line;
Fig. 5 is the schematic view of still a further embodiment variant of the lower end of the hook of this invention; and
Fig. 6 is the schematic view of a through section of the hook of Fig. 5, obtained with a through-plane along the C-C line.

With reference to the drawings, a hook (10), preferably from metal rod section, is connected with a length of tubular element (12), to form together a bar for the control of awnings. Said hook (10) comprises a bent end, a substantially rectlinear lower portion (14) having a conified basis (18) and a substantially oblique intermediate connecting portion (24). Along the lower rectilinear portion (14) of hook (10), preferably made from galvanized iron, couples of opposed quadrangular impressions (16) are obtained by coining. Said impressions (16) develop starting from a portion near the conified basis (18) of hook (10) and extends vertically for a height preferably comprised between 12 and 18 mm.

Following the aforementioned coining operation, obtained generally by means of horizontal presses, a vertical rib (20), substantially aligned with the underlying (22) and overlying (24) parts remains between a couple of quadrangular impressions (16), which parts are not subject to permanent deformation. Ribs (20) define as many truing seams for the tubular element (12) which is fitted on hook (10). The upper and lower bases of each impression (16), vice-versa, are lower relatively to the non deformed portions (22 and 24), creating as many horizontal engagement sectors for the tubular element (12). Said tubular element (12), after having been fitted on end (14) of hook (10) is radially compressed in the direction of the quadrangular impressions (16).

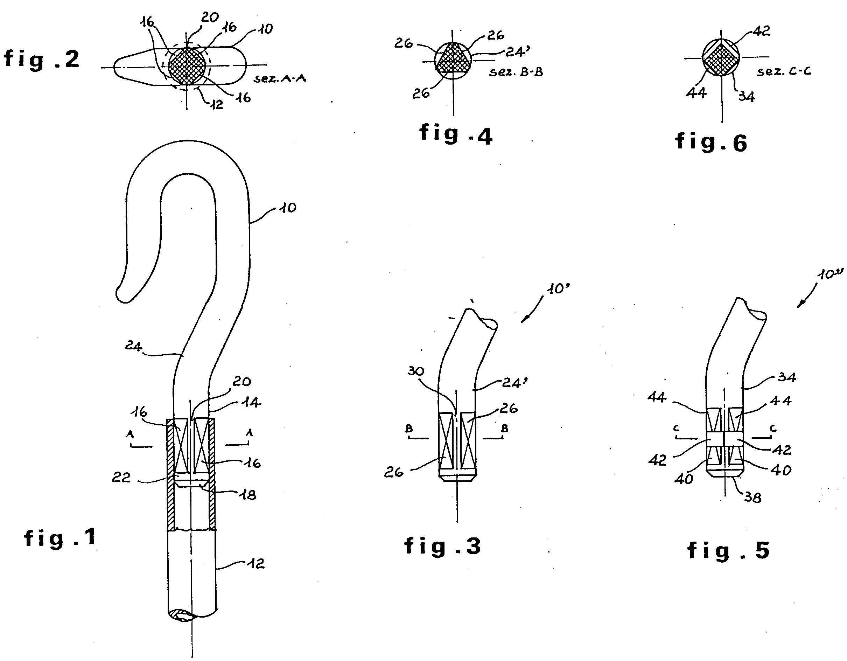

Figs. 3 and 4 show schematically an embodiment variant of the bar subject matter of this invention, relatively to the configuration of end (24') of the hook, indicated by 10', which connects with the tubular element (12).

Along said end (24'), three quadrangular impressions (26) are obtained, substantially arranged at 120°, whose extension in height is preferably analogous to that of the impression (16) of Figs. 1 and 2. Said impressions (24) are spaced out by ribs (30) for truing the tubular element (not represented), which is also radially compressed after its fitting on said end (24').

A further alternative embodiment is schematically shown on Figs. 5 and 6, showing end (34) of a hook (10'') on which opposing couples of quadrangular impressions (40, 42, 44) are obtained, which are smaller and superposed to one another. Starting from a portion near the basis (38), said end (34) of hook (10'') has two first opposing couples of quadrangular impressions (40), limitedly extended in height, circumscribed on the top by further couples of sharp cornered quadrangular impressions (42). Close to said quadrangular impressions (42) in the upper portion, two second opposing couples of impressions (44) are obtained, analogous to said first couples of impressions (40) and aligned with them.

The tubular element fitted on end (34) of hook (10''), subsequently radially compressed, meets with the internal wall the various superposed impressions (40, 42, 44) which constitute, with their lowered or cornered portions, many points of anti-rotatory clutching.

As can be understood from the above, the invention achieves many advantages.

The hooked bar subject matter of this invention allows to realize the easy and stable coupling of the components, mainly defined by the shaped end, or hook, and by the underlying tubular element.

The formation on the end of the bar-shaped element of flattened sectors having a substantially quadrangular shape, which define as many facets or impressions, allows the efficient and stable connection of the tubular body, preventing phenomena of slackening or unthreading of the elements similarly connected, following repeated utilizations.

This invention has been described with reference to the drawings which show some embodiments by way of example. It is therefore understood that the above described hooked bar may be subject to many modifications and variants, all of which however fall within the protection scope of the invention concept.

For instance, the end portion of the hook may be provided, compared with what has been described and illustrated by way of example, with a different number of sectors having a quadrangular shape or some other shape, and any extension.

Along said sectors, through or dead holes, possibly superposed or clearly spaced out between one another, may be obtained, to constitute further hooking points for the tubular element.

An analogous connecting structure between the bar-shaped element and the tubular body may also be obtained, along the development of the awning bar, also in another position, for instance in correspondence of the connection with the handle.

Lastly, possible structural inversions and alternative locations of the components which form as a whole the hooked bar subject matter of this invention are also possible.

## Claims

1. Hooked bar (10) for the control of awnings, constituted by at least a portion from section rod, coupled to a tubular sector, characterized in that the lower end (14) of hook (10) is provided with a plurality of lower impressions (16, 26, 40, 42, 44) obtained by coining.

2. Bar according to claim 1, characterized in that hook (10) comprises a bent end, a lower end (14) substantially rectilinear relatively to the conified basis (18) and a substantially oblique intermediate connecting portion (24); said lower end being provided with two opposed couples of quadrangular impressions (16), which starting from the portion near the conified basis (18) extends vertically for a height comprised between 12 and 18 mm.

3. Bar according to claim 1 or 2, characterized in that said impressions (16) are separated by a vertical rib (20) aligned with the underlying (22) and overlying (24) portions of hook (10) which are not subject to permanent deformation.

4. Bar according to any of the above claims, characterized in that the upper and lower bases of each impression (16) are lower relatively to the underlying (22) and overlying (24) portions of hook (10), which are not subject to permanent deformation.

5. Bar according to claim 1, characterized in that the lower end (24) of hook (10') is provided with three quadrangular impressions (26), substantially arranged at 120° and spaced out by vertical ribs (30).

6. Bar according to claim 1, characterized in that the lower end (34) of hook (10'') is provided with two first opposed couples of quadrangular impressions (40), which develop from a position close to the basis (38) for a limited height and are circumscribed on the top by further couples of sharp-cornered quadrangular impressions (42), in the upper of said sharp-cornered quadrangular impressions (42) two second couples of impressions (44) analogous to the former ones (44) and aligned with them being obtained.

7. Bar according to any of the above claim, characterized in that the lower end (14) of hook (10, 10', 10'') along which the impressions (16, 26, 40, 42, 44) are obtained is provided with two or more through or dead holes.

8. Bar according to any of the above claims, characterized in that said impressions (16, 26, 40, 42, 44) are formed at the opposing ends of the portions from section rod integrated in said bar.

9. Bar according to any of the above claims, in which the hook is made from galvanized iron.

10. Bar according to any of the above claims, in which the impressions (16, 26, 40, 42, 44) are obtained by coining by means of horizontal presses.
